# EUROPEAN PATENT APPLICATION

(11) **EP 4 730 505 A1**
(43) Date of publication of application: **22.04.2026**
(21) Application number: 25194900.4
(22) Date of filing: 08.08.2025
(51) Int. Cl.: H01M 50/204, H01M 50/333

(54) **EXPLOSION-PROOF PANEL AND ENERGY STORAGE SYSTEM INCLUDING THE SAME**

(30) Priority: 15.10.2024 KR 20240140657
(71) Applicant: SAMSUNG SDI CO., LTD., Yongin-si, Gyeonggi-do 17084 (KR)
(72) Inventor: LEE, Jigu, 17084 Yongin-si (KR)
(74) Representative: Marks & Clerk LLP

(57) **Abstract**

An explosion-proof panel (100) includes a support portion (110) fixed to a container portion (12), the container portion accommodating one or more battery modules, a cover portion (120) parallel to the support portion (110), and a length-adjusting portion (130) configured to adjust a separation distance between the support portion (110) and the cover portion (120), wherein the cover portion (120) is movable in a first direction D1 according to an internal pressure of the container portion, the separation distance being adjustable.

## Description

### BACKGROUND

### 1. Field

One or more embodiments relate to an explosion-proof panel and an energy storage system including the same.

### 2. Description of the Related Art

Secondary batteries, unlike primary batteries that may not be recharged, are batteries that may be repeatedly charged and discharged, and are used as a power supply unit for various electronic devices. Secondary batteries may be used as a single battery or multiple batteries that are electrically connected, depending on the type of electronic device. For example, small devices, such as mobile phones, may operate for a certain period of time with the output and capacity of a single secondary battery, whereas in cases such as electric vehicles where high output and high capacity are required, multiple secondary batteries may be used by being connected in series, parallel, or series-parallel.

Recently, as the need for large-capacity structures, including use as an energy storage source, has increased, the demand for energy storage systems (ESS) capable of storing large amounts of electric energy has increased. Energy storage systems are systems that store generated electricity and supply the electricity when needed to increase energy efficiency. The need for these systems has increased due to the increase in electricity demand and the full-scale introduction of renewable energy. In particular, in case electricity is generated and supplied by using renewable energy sources such as solar power generation and wind power generation, the energy storage systems may be used to ensure a stable supply of electricity because power production is irregular due to the nature of renewable energy sources.

The above information disclosed in this Background section is for enhancement of understanding of the background of the present disclosure, and therefore, it may contain information that does not constitute related (or prior) art.

### SUMMARY

Embodiments include an explosion-proof panel, including a support portion fixed to a container portion, the container portion accommodating one or more battery modules, a cover portion parallel to the support portion, and a length-adjusting portion configured to adjust a separation distance between the support portion and the cover portion, wherein the cover portion is movable in a first direction according to an internal pressure of the container portion, the separation distance being adjustable.

The cover portion may include a discharge passage through which gas inside the container portion is discharged in a space between the cover portion and the support portion.

The support portion may include a first through-hole through which gas inside the container portion is able to pass.

The first through-hole may include a plurality of first through holes and the plurality of first through-holes may be arranged in a predetermined arrangement.

The explosion-proof panel may further include an insulating portion between the support portion and the cover portion, wherein the insulating portion includes a second through-hole surrounding the length-adjusting portion.

A diameter of the second through-hole may be smaller than a diameter of the first through-hole.

The insulating portion may be movable in the first direction by a pressure of gas passing through the first through-hole, the insulating portion being spaced apart from the support portion.

The length-adjusting portion may include an elastic member configured to adjust a separation space between the cover portion and the support portion by an elastic restoring force.

The elastic member may have an elastic restoring force in a direction in which the cover portion moves toward the support portion.

Embodiments include an energy storage system, including a container portion having an internal space accommodating one or more battery modules, the container portion having at least one opening portion on one surface of the container portion, and an explosion-proof panel configured to open and close the at least one opening portion, wherein the explosion-proof panel includes a support portion fixed to the container portion, a cover portion parallel to the support portion, and a length-adjusting portion configured to adjust a separation distance between the support portion and the cover portion, and wherein the cover portion movable in a first direction according to an internal pressure of the container portion, resulting in an adjustment of the separation distance.

The container portion may include a corner casting at an edge thereof, and the explosion-proof panel may have a height equal to or less than a height of the corner casting.

The cover portion may include a discharge passage through which gas inside the container portion may be discharged in a space between the cover portion and the support portion.

The support portion may have a larger area than a cross-section of the at least one opening portion.

A first through-hole through which gas inside the container portion is able to pass is in the support portion.

The energy storage system may further include an insulating portion between the support portion and the cover portion, wherein the insulating portion includes a second through-hole surrounding the length-adjusting portion.

A diameter of the second through-hole may be smaller than a diameter of the first through-hole.

There may be no overlap between the first through-hole and the second through-hole.

The insulating portion may be movable in the first direction by a pressure of gas passing through the first through-hole, the insulation portion being spaced apart from the support portion.

The length-adjusting portion may include an elastic member configured to adjust the separation distance between the cover portion and the support portion by an elastic restoring force.

The elastic member may have an elastic restoring force in a direction in which the cover portion moves toward the support portion.

At least some of the above and other features of the invention are set out in the claims.

Other aspects, features, and advantages other than those described above will become apparent from the following drawings, claims, and detailed description of the disclosure.

### BRIEF DESCRIPTION OF THE DRAWINGS

Features will become apparent to those of ordinary skill in the art by describing in detail example embodiments with reference to the attached drawings, in which:
FIG. 1 is a perspective view schematically illustrating an energy storage system according to an embodiment;
FIG. 2 is an exploded perspective view of an explosion-proof panel according to the embodiment illustrated in FIG. 1;
FIG. 3 is a bottom view of an explosion-proof panel according to an embodiment;
FIG. 4 is a cross-sectional view showing a state in which the explosion-proof panel is closed, taken along a line A-A' of FIG. 1.
FIG. 5 is a cross-sectional view showing a state in which the explosion-proof panel is open;
FIG. 6A is a cross-sectional view of an energy storage system according to another embodiment, which shows a state in which an explosion-proof panel is closed;
FIG. 6B is a cross-sectional view showing a state in which the explosion-proof panel of FIG. 6A is open;
FIG. 7A is a cross-sectional view of an energy storage system according to another embodiment, which shows a state in which an explosion-proof panel is closed;
FIG. 7B is a bottom view of the explosion-proof panel of FIG. 7A; and
FIG. 7C is a cross-sectional view showing a state in which the explosion-proof panel of FIG. 7A is open.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As the disclosure allows for various changes and numerous embodiments, particular embodiments will be illustrated in the drawings and described in detail in the written description. However, this is not intended to limit the disclosure to particular embodiments, but should be understood to include all transformations, equivalents, or substitutes included in the technical scope of the disclosure.

While such terms as "first," "second," etc., may be used to describe various components, such components must not be limited to the above terms. The above terms are used only to distinguish one component from another.

The terminologies used in this disclosure are used only to describe particular embodiments and are not intended to limit the disclosure. An expression used in the singular encompasses the expression of the plural, unless it has a clearly different meaning in the context. In addition, in each drawing, components are exaggerated, omitted, or schematically illustrated for convenience and clarity of explanation, and the size of each component does not entirely reflect the actual size.

In the description of each component, when it is described as being formed on or under, on and under include both cases that those are formed directly or through the intervention of other components, and the criteria for on and under are explained based on the drawings.

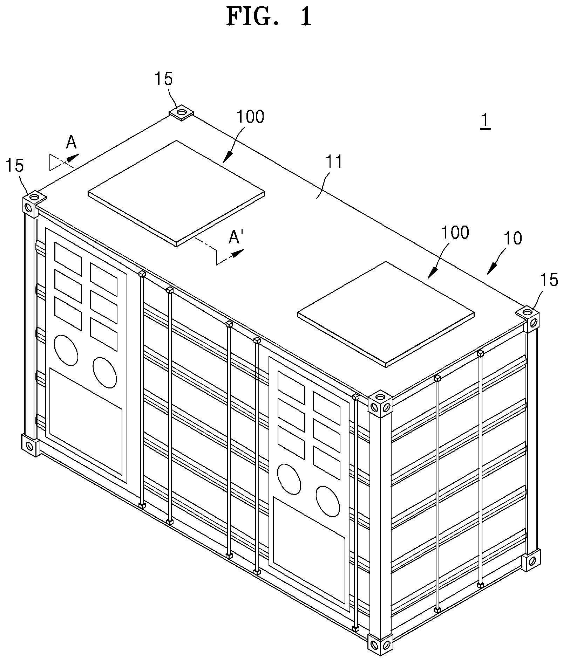

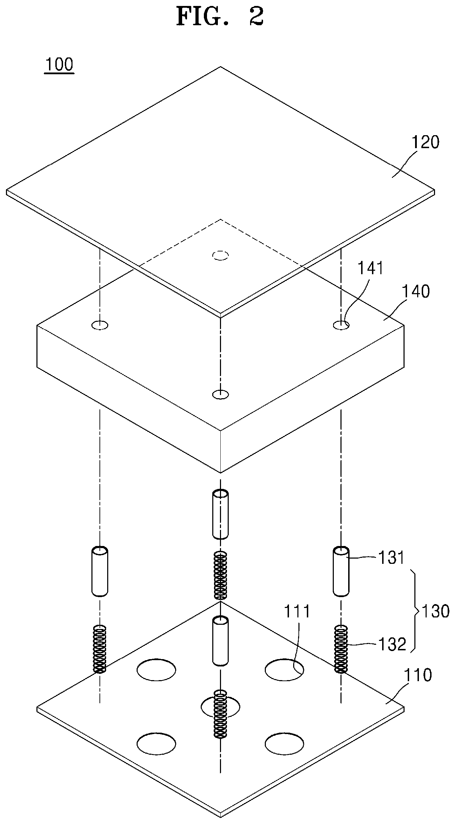

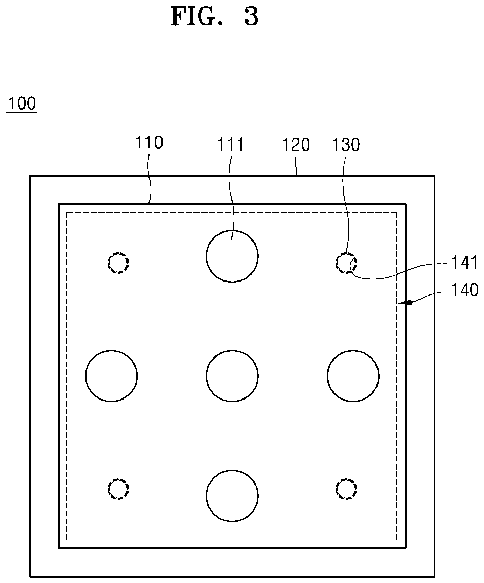

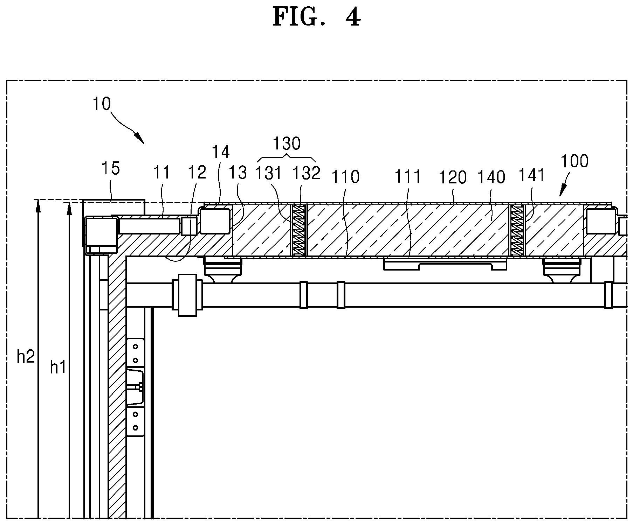

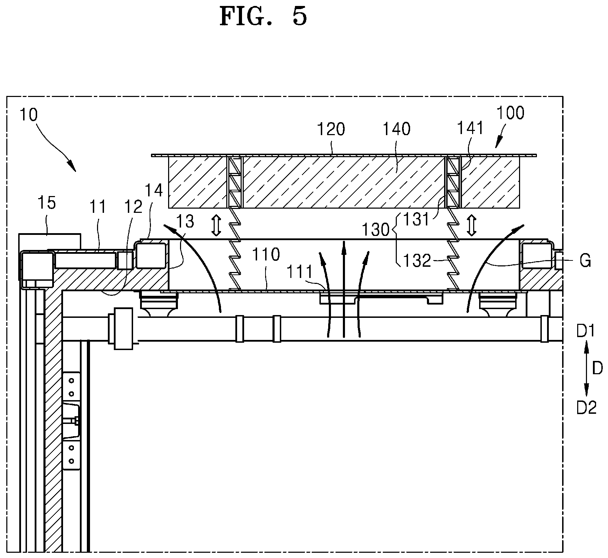

FIG. 1 is a perspective view schematically illustrating an energy storage system 1 according to an embodiment, FIG. 2 is an exploded perspective view of an explosion-proof panel 100 according to the embodiment illustrated in FIG. 1, and FIG. 3 is a bottom view of the explosion-proof panel 100 according to an embodiment. FIG. 4 is a cross-sectional view showing a state in which the explosion-proof panel 100 is closed, taken along a line A-A' of FIG. 1. FIG. 5 is a cross-sectional view showing a state in which the explosion-proof panel 100 is open.

Referring to FIGS. 1 to 5, the energy storage system 1 according to an embodiment may include a container portion 10 and the explosion-proof panel 100. The energy storage system 1 may sealably accommodate a plurality of battery modules and may be used as a household or industrial energy source. The energy storage system 1 may be provided to withstand fire or explosion pressure in case a dangerous situation such as a fire or explosion due to an abnormality in the battery modules accommodated in the energy storage system 1 occurs.

The container portion 10 may have a box shape in which an upper panel, a lower panel, and a side panel are coupled to each other, and an internal space capable of accommodating the one or more battery modules may be formed inside the container portion 10. A corner casting 15 may be provided at the corner (e.g., each corner) of the container portion 10 to facilitate movement and loading of the energy storage system 1. Each explosion-proof panel 100 of the container portion 10 may include a steel plate material capable of withstanding explosion pressure or the like, and may also include an insulating material layer to prevent heat conduction.

At least one opening portion 13 may be formed in one surface 11 of the container portion 10. The at least one opening portion 13 may be formed by penetrating from the surface 11 of the container portion 10 to another surface 12 of the container portion 10. Here, the surface 11 of the container portion 10 may mean an outer side surface of one of the upper panel, lower panel, and side panel, and the other surface 12 of the container portion 10 may mean an inner side surface opposite to the surface 11.

In case a plurality of opening portions 13 (see FIG. 4) are formed on the surface 11 of the container portion 10, the plurality of opening portions 13 may be arranged at a set interval, but this may vary. Gas G (see FIG. 5) inside the container portion 10 may be discharged to the outside by passing through the at least one opening portion 13 in a direction from the other surface 12 of the container portion 10 toward the surface 11 of the container portion 10.

The explosion-proof panel 100 may be installed on the at least one opening portion 13 of the container portion 10. The explosion-proof panel 100 may open or close the at least one opening portion 13 depending on an internal pressure of the container portion 10. In an embodiment (see FIG. 2), the explosion-proof panel 100 may include a support portion 110, a cover portion 120, and a length-adjusting portion 130.

The support portion 110 may be fixed (e.g., position-fixed) to the container portion 10 at a position corresponding to the at least one opening portion 13 formed in the container portion 10. The support portion 110 may be configured to couple the explosion-proof panel 100 to the container portion 10 and support the opening and closing movement of the explosion-proof panel 100.

The support portion 110 may have a cross-sectional area corresponding to the cross-section of the at least one opening portion 13. For example, the support portion 110 may have a relatively larger area than the cross-section of the at least one opening portion 13 and may cover the at least one opening portion 13 by being coupled to the other surface 12 of the container portion 10.

As another example, the support portion 110 may have an area equal to or smaller than the cross-section of the at least one opening portion 13, and in this case, the support portion 110 may be fixed to the container portion 10 through a separate fixing unit.

The support portion 110 may include a material that is less transformed under explosion pressure. For example, the support portion 110 may include a steel plate material, but other materials are possible.

A first through-hole 111, through which the gas G (see FIG. 5) inside the container portion 10 may pass, may be formed in the support portion 110. A plurality of first through-holes 111 may be provided, and the plurality of first through-holes 111 may be arranged to form a certain arrangement (see FIG. 3).

The cover portion 120 may be arranged parallel (e.g., in a height direction in the configuration shown) to the support portion 110 (see FIG. 2). For example, the cover portion 120 may be arranged to be spaced apart from the support portion 110 at a certain distance in a state in which the explosion-proof panel 100 is closed. The cover portion 120 may be coupled to the surface 11 of the container portion 10 to seal the at least one opening portion 13 in a state when the explosion-proof panel 100 is closed.

In an embodiment, the cover portion 120 may be formed to have a relatively larger area than the cross-section of the at least one opening portion 13. At this time, a protrusion portion 14 having a certain width and protruding along a perimeter of the at least one opening portion 13 may be formed on the surface 11 of the container portion 10, and the cover portion 120 may be installed on the protrusion portion 14 to seal the at least one opening portion 13.

As another example, a groove portion having a certain width and being introduced along the perimeter of the at least one opening portion 13 may be formed in the surface 11 of the container portion 10, and the cover portion 120 may be installed in the groove portion to seal the at least one opening portion 13.

However, the cover portion 120 may be formed to have an area equal to or smaller than the cross-section of the at least one opening portion 13, and the at least one opening portion 13 may be sealed by adjusting the distance from the support portion 110 through a length-adjusting portion 130 (see FIG. 2) to be described below.

For example, the cover portion 120 may be provided to be movable in a first direction D (see FIG. 5). Here, the first direction D may mean a direction different from a direction in which the support portion 110 and the cover portion 120 are arranged in parallel to each other, and may mean a direction perpendicular to a plane in which the cover portion 120 extends.

The cover portion 120 may move back and forth along the first direction D to open or close the at least one opening portion 13.

The cover portion 120 may include a material that is less transformed under explosion pressure. For example, the cover portion 120 may include a steel plate material, but the material may vary.

The length-adjusting portion 130 may be placed between the support portion 110 and the cover portion 120 to connect the support portion 110 to the cover portion 120. One end of the length-adjusting portion 130 may be connected to the support portion 110, and another end of the length-adjusting portion 130 may be connected to the cover portion 120.

At this time, the first through-hole 111 may not be formed at a portion of the support portion 110, to which the one end of the length-adjusting portion 130 is connected. That is, the first through-hole 111 may be formed not to overlap the length-adjusting portion 130.

The length-adjusting portion 130 may be configured to adjust a distance between the support portion 110 and the cover portion 120 and guide the cover portion 120 to move in the first direction D.

Although an embodiment in which four length-adjusting portions 130 are provided is shown in the drawing, the number of length-adjusting portions 130 may be modified by considering pressure generated during an explosion or the like.

In an embodiment, the length-adjusting portions 130 may include an accommodating portion 131 and an elastic member 132. The accommodating portion 131 may protect the elastic member 132 by accommodating the elastic member 132 inside the accommodating portion 131. The accommodating portion 131 may be provided with a length corresponding to a separation distance between the support portion 110 and the cover portion 120 in a state in which the cover portion 120 closes the at least one opening portion 13.

The elastic member 132 may provide an elastic restoring force between the support portion 110 and the cover portion 120, and may allow the cover portion 120 to perform a reciprocating linear motion with respect to the support portion 110.

For example, the elastic member 132 may be connected to the support portion 110 and the cover portion 120 in a compressed state, and may provide an elastic restoring force to the cover portion 120 in a direction D1 (see FIG. 5) toward the outside of the energy storage system 1. At this time, the explosion-proof panel 100 may be maintained in a closed state by a coupling force between the accommodating portion 131 and the support portion 110, between the accommodating portion 131 and the cover portion 120, or between the cover portion 120 and the container portion 10, and in case the internal pressure of the container portion 10 increases, the cover portion 120 may be quickly protruded in the direction D1 by the elastic restoring force of the elastic member 132.

As another example, the elastic member 132 may be connected to the support portion 110 and the cover portion 120 in an extended state, and may provide an elastic restoring force to the cover portion 120 in a direction D2 toward the inside of the energy storage system 1. That is, the elastic member 132 may have an elastic restoring force in a direction in which the cover portion 120 moves toward the support portion 110. At this time, the explosion-proof panel 100 may be maintained in a closed state by the coupling force between the cover portion 120 and the container portion 10.

In case the elastic member 132 is provided to have an elastic restoring force in the direction D2, when the internal pressure of the container portion 10 increases, the cover portion 120 may move in the direction D1 by the pressure to open the at least one opening portion 13, and when the internal pressure of the container portion 10 decreases, the cover portion 120 may move in the direction D2 by the elastic restoring force of the elastic member 132 to close the at least one opening portion 13.

As another example, the elastic member 132 may be connected to the support portion 110 and the cover portion 120 in a basic state that the elastic member 132 is neither compressed nor stretched.

In an embodiment, the explosion-proof panel 100 may further include an insulating portion 140 arranged between the support portion 110 and the cover portion 120. The insulating portion 140 may be provided with an area corresponding to the at least one opening portion 13 and may seal and insulate the at least one opening portion 13. The area of the insulating portion 140 may be smaller than the area of the support portion 110 or the area of the cover portion 120, but the area of the insulating portion 140 may vary.

A second through-hole 141 into which the length-adjusting portion 130 may be inserted may be formed in the insulating portion 140. The second through-hole 141 may be formed to surround the length-adjusting portion 130.

The second through-hole 141 may not overlap the first through-hole 111 of the support portion 110. A diameter of the second through-hole 141 may be relatively smaller than that of the first through-hole 111. Accordingly, the gas G discharged through the first through-hole 111 may not interfere with the length-adjusting portion 130 inserted into the second through-hole 141.

One surface of the insulating portion 140 may be coupled to the cover portion 120. Therefore, the insulating portion 140 may move together with the cover portion 120 in case the cover portion 120 moves in the first direction D.

Another surface of the insulating portion 140 may be in contact with the support portion 110. For example, a contact state of the other surface of the insulating portion 140 with the support portion 110 may change depending on the internal pressure of the container portion 10. In some embodiments, in case no explosion occurs inside the container portion 10, the insulating portion 140 may remain in contact with the support portion 110.

In some embodiments, in case an explosion occurs inside the container portion 10, the internal pressure of the container portion 10 may increase, and the insulating portion 140 may be quickly separated from the support portion 110. At this time, the support portion 110 may be maintained in a fixed position in the container portion 10, and an explosion pressure inside the container portion 10 may be transmitted to the insulating portion 140 through the first through-hole 111 of the support portion 110.

The insulating portion 140 may receive an external force in the direction D1 due to the above explosion pressure and may be separated from the support portion 110. The cover portion 120 may move in the direction D1 while being supported by the length-adjusting portion 130 in a state of being coupled to the insulating portion 140.

As shown in FIG. 5, as the insulating portion 140 and the cover portion 120 move in the direction D1, a separation distance between the insulating portion 140 and the support portion 110 may increase, and a discharge passage through which the gas G inside the container portion 10 may be discharged to the outside may be formed in a separation space between the insulating portion 140 and the support portion 110.

The gas G inside the container portion 10 may be introduced into the separation space between the support portion 110 and the insulating portion 140 by passing through the first through-hole 111 and may be quickly discharged to the outside by passing through a space between the insulating portion 140 and the at least one opening portion 13.

In some embodiments, as shown in FIG. 4, in a state in which the explosion-proof panel 100 is closed, a height h1 of the cover portion 120 arranged at the outermost side of the explosion-proof panel 100 may be lower than or equal to a height h2 of the corner casting 15 positioned at an edge of the container portion 10. That is, the explosion-proof panel 100 may not protrude in the direction D1 relative to the corner casting 15 in case no explosion occurs inside the container portion 10.

In a comparative example, an explosion-proof panel installed in an energy storage system is connected to a container portion via a hinge, and thus the explosion-proof panel is configured to rotate about the hinge due to an explosion pressure and open an opening portion. A structure of such an explosion-proof panel has a problem in that the explosion-proof panel could only operate when there was space secured on an upper portion of the energy storage system, and the explosion-proof panel would not operate when there was an obstacle such as snow on the upper portion of the energy storage system. For example, there is a problem that energy storage systems equipped with explosion-proof panels could not be shipped on container ships because an installation height of the explosion-proof panels is higher than a corner casting of the container portion.

In some embodiments, the height h1 of the explosion-proof panel 100 may be lower than the height h2 of the corner casting 15, as the explosion-proof panel 100 includes the length-adjusting portion 130 between the support portion 110 and the cover portion 120, which moves the cover portion 120 in the direction D1, and thus it is easy to load the energy storage system 1 on a container ship. For example, the internal pressure of the energy storage system 1 may be discharged through a minimal upper space, thereby improving space efficiency.

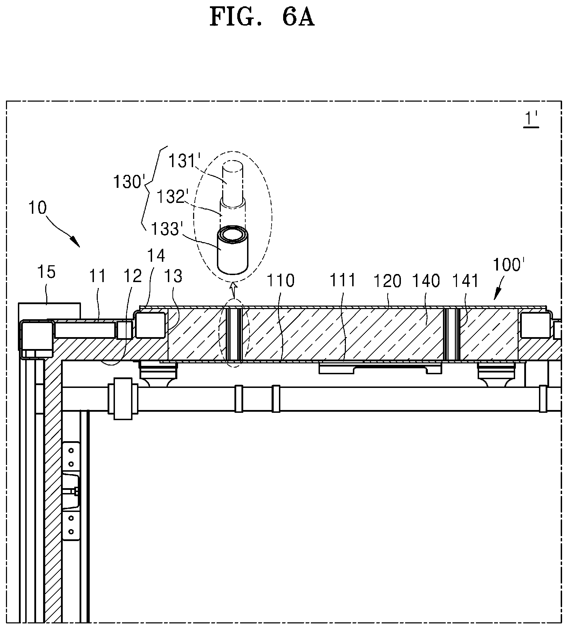

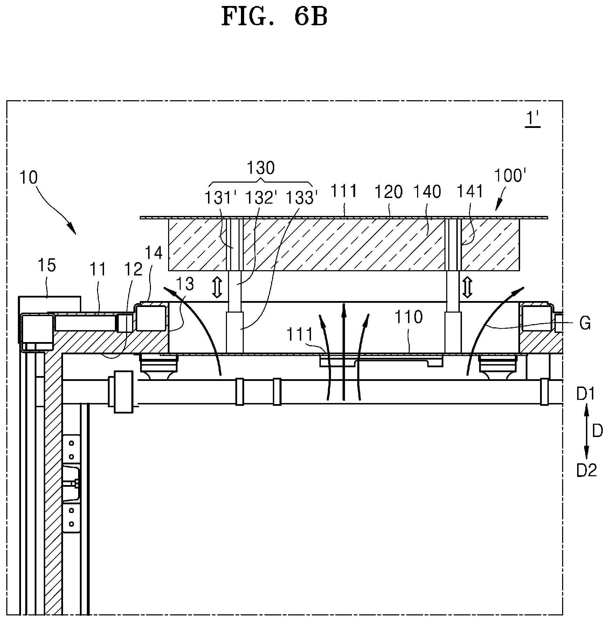

FIG. 6A is a cross-sectional view of an energy storage system 1' according to another embodiment, which shows a state in which an explosion-proof panel 100' is closed. FIG. 6B is a cross-sectional view showing a state in which the explosion-proof panel 100' of FIG. 6A is open.

Referring to FIGS. 6A and 6B, the energy storage system 1' may include a container portion 10 and an explosion-proof panel 100'. The explosion-proof panel 100' may include a support portion 110, a cover portion 120, a length-adjusting portion 130', and an insulating portion 140. When compared to the explosion-proof panel 100 according to the embodiment described with reference to FIGS. 1 to 5, the explosion-proof panel 100' according to the embodiment illustrated in FIGS. 6A to 6B has differences in the structure and operation of the length-adjusting portion 130'. Accordingly, the above differences are mainly described below.

The length-adjusting portion 130' may connect the support portion 110 and the cover portion 120 between the support portion 110 and the cover portion 120, and may support a movement of the cover portion 120 in the first direction D.

The length-adjusting portion 130' may include an outer body 133' and at least one inner tube inserted into an inner side of the outer body 133'. An embodiment in which the length-adjusting portion 130' includes a first inner tube 131' and a second inner tube 132' is shown in FIGS. 6A and 6B, but the number of inner tubes may vary.

The first inner tube 131' and the second inner tube 132', which are inserted into the inside of the outer body 133', may have different diameters. The first inner tube 131' may move in the first direction D to be inserted into the second inner tube 132' or protrude from the second inner tube 132'. The second inner tube 132' may move in the first direction D to be inserted into the outer body 133' or protrude from the outer body 133'.

A length of the outer body 133' may correspond to (e.g., be the same as) a separation distance between the support portion 110 and the cover portion 120 or a thickness of the insulating portion 140. The outer body 133' may be inserted into the second through-hole 141 of the insulating portion 140, and one end of the outer body 133' may be connected to the support portion 110. The first inner tube 131' having the smallest diameter may have one end coupled to the cover portion 120. However, the length-adjusting portion 130' may have the outer body 133' coupled to the cover portion 120 and the second inner tube 132' coupled to the support portion 110.

As shown in FIG. 6A, in a state in which the explosion-proof panel 100' is closed, the length-adjusting portion 130' may support the cover portion 120 in a state in which the first inner tube 131' and the second inner tube 132' are inserted into the outer body 133'.

In case an explosion occurs inside the container portion 10 and the internal pressure of the container portion 10 increases, the cover portion 120 and the insulating portion 140 are subjected to a force that protrudes in the first direction D1 due to a pressure transmitted to the insulating portion 140 through the first through-hole 111, and the first inner tube 131' and the second inner tube 132' protrude to the outside from the length-adjusting portion 130'.

The first inner tube 131', the second inner tube 132', and the outer body 133' may form a straight line while protruding to a maximum extent and may support the cover portion 120 in response to an explosion pressure. That is, the first inner tube 131', the second inner tube 132', and the outer body 133' may adjust the separation distance between the cover portion 120 and the support portion 110.

In case the insulating portion 140 and the support portion 110 are separated by the explosion pressure inside the container portion 10 and the gas G inside the container portion 10 is sufficiently discharged through the discharge passage after the at least one opening portion 13 is opened, the internal pressure of the container portion 10 reduces. In case the internal pressure of the container portion 10 is sufficiently reduced, the cover portion 120 may be moved toward the support portion 110, and the first inner tube 131' and the second inner tube 132' of the length-adjusting portion 130' may be reinserted into the inside of the outer body 133', thereby restoring the explosion-proof panel 100' to its original state.

In some embodiments, the descriptions of the container portion 10 of the energy storage system 1' and the support portion 110, the cover portion 120, and the insulating portion 140 of the explosion-proof panel 100' may correspond to the descriptions of the energy storage system 1 and the explosion-proof panel 100 according to the embodiments described with reference to FIGS. 1 to 5.

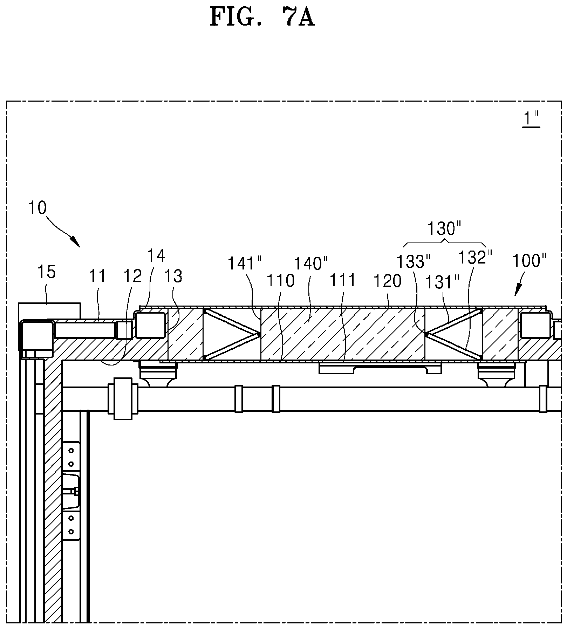

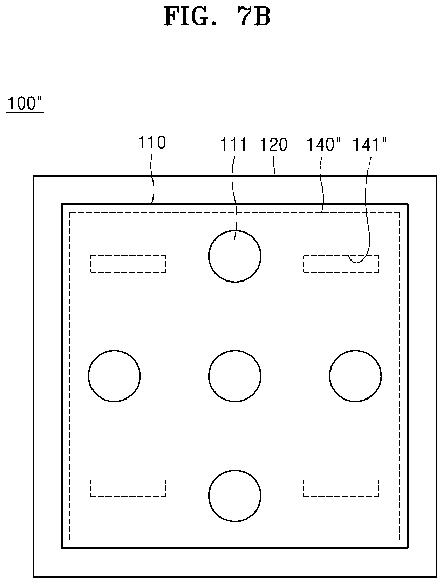

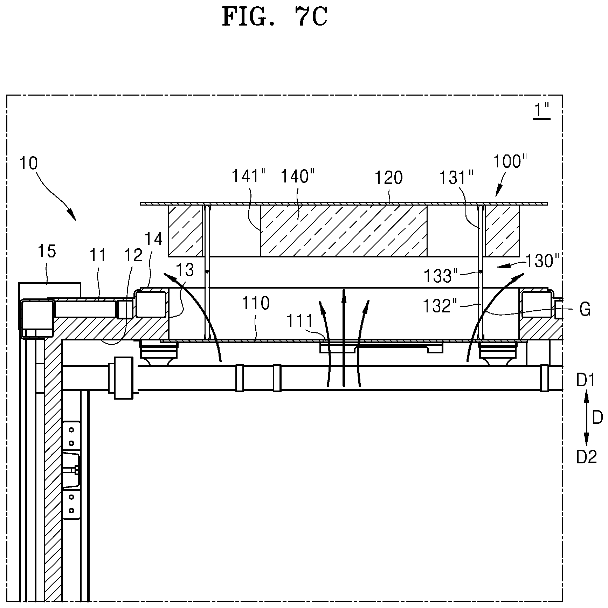

FIG. 7A is a cross-sectional view of an energy storage system 1" according to another embodiment, which shows a state in which an explosion-proof panel 100" is closed. FIG. 7B is a bottom view of the explosion-proof panel 100" of FIG. 7A. FIG. 7C is a cross-sectional view showing a state in which the explosion-proof panel 100" of FIG. 7A is open.

Referring to FIGS. 7A to 7C, the energy storage system 1" may include a container portion 10 and an explosion-proof panel 100". The explosion-proof panel 100" may include a support portion 110, a cover portion 120, a length-adjusting portion 130", and an insulating portion 140". When compared to the explosion-proof panel 100 according to the embodiment described with reference to FIGS. 1 to 5, the explosion-proof panel 100" according to the embodiment illustrated in FIGS. 7A to 7C has differences in the structures and operations of the length-adjusting portion 130" and the insulating portion 140". Accordingly, the above differences are mainly described below.

The length-adjusting portion 130" may connect the support portion 110 and the cover portion 120 between the support portion 110 and the cover portion 120, and may support a movement of the cover portion 120 in the first direction D. In addition, the length-adjusting portion 130" may adjust a separation distance between the support portion 110 and the cover portion 120.

The length-adjusting portion 130" may include a first arm 131", a second arm 132", and a rotating portion 133". The first arm 131" may have one end connected to a lower surface of the cover portion 120, and may have another end connected to the second arm 132" through the rotating portion 133". The second arm 132" may have one end connected to the support portion 110, and may at another end be connected to the first arm 131" through the rotating portion 133".

The rotating portion 133" may connect the first arm 131" to the second arm 132" so that the first arm 131" and the second arm 132" rotate in conjunction with each other, and may serve as a rotating axis around which the first arm 131" and the second arm 132" rotate.

The insulating portion 140" may be arranged between the support portion 110 and the cover portion 120, and may be arranged so that one surface of the insulating portion 140" is coupled to the cover portion 120 and another surface of the insulating portion 140" is in contact with the support portion 110. A second through-hole 141" into which the length-adjusting portion 130" may be inserted may be formed in the insulating portion 140".

The second through-hole 141" may protect an operation of the length-adjusting portion 130". The second through-hole 141" may be formed to have a size and width that may accommodate the first arm 131" and the second arm 132".

In a state in which the explosion-proof panel 100" is closed, the rotating portion 133" may be arranged within the second through-hole 141" to be adjacent to a center of the explosion-proof panel 100". At this time, the first arm 131" and the second arm 132" may be arranged adjacent to each other in a bent shape at the rotating portion 133".

In case the explosion-proof panel 100" is changed from a closed state to an open state, the rotating portion 133" may move in a direction away from the center of the explosion-proof panel 100", and the first arm 131" and the second arm 132" may move away from each other. In a state in which the explosion-proof panel 100" is opened to the maximum, the first arm 131" and the second arm 132" may be arranged to form a straight line, and the cover portion 120 and the support portion 110 may be spaced apart to the maximum.

In some embodiments, the descriptions of the container portion 10 of the energy storage system 1" and the support portion 110 and the cover portion 120 of the explosion-proof panel 100" may correspond to the descriptions of the energy storage system 1 and the explosion-proof panel 100 according to the embodiments described with reference to FIGS. 1 to 5.

As described above, the explosion-proof panel 100 and the energy storage system 1 according to embodiments may separate the cover portion 120 from the support portion 110 that discharges the gas G through the first through-hole 111 by including the support portion 110, the cover portion 120, and the length-adjusting portion 130, and thus the gas G inside the explosion-proof panel 100 may be discharged quickly and easily, thereby improving stability of the energy storage system 1.

**In** some embodiments, the explosion-proof panel 100 and the energy storage system 1 according to embodiments may be reused and reduce costs because the explosion-proof panel 100 and the energy storage system 1 may be restored to their original states after the gas G inside the explosion-proof panel 100 is sufficiently discharged.

In some embodiments, the explosion-proof panel 100 and the energy storage system 1 according to embodiments may reduce an installation height of the explosion-proof panel 100 by having the length-adjusting portion 130 that supports a movement of the cover portion 120 in a first direction, and may reduce a space required for an operation of the explosion-proof panel 100, thereby improving space efficiency of the explosion-proof panel 100. In some embodiments, because the installation height of the explosion-proof panel 100 may be lower than the height of the corner casting 15 of the container portion 10, the energy storage system 1 may be shipped, and the product cost of a battery module may be reduced.

Energy storage systems typically contain a large number of battery modules to secure a large charge/discharge capacity, and when the batteries are exposed to high temperatures, explosions and fires may occur due to a thermal runaway phenomenon. In addition, even when an event occurs in a single battery, there is a risk that a chain explosion will occur, greatly expanding the damage.

According to the disclosure described above, an explosion-proof panel and an energy storage system according to an embodiment may quickly discharge pressure generated by an explosion accident to the outside by separating a cover portion from a support portion according to an internal pressure of the container portion.

One or more embodiments provide an explosion-proof panel capable of quickly discharging pressure generated when an explosion accident occurs within a container portion and having improved space efficiency, and an energy storage system including the explosion-proof panel.

According to the disclosure described above, an explosion-proof panel and an energy storage system according to an embodiment may quickly discharge pressure generated by an explosion accident to the outside by separating a cover portion from a support portion according to an internal pressure of the container portion.

In some embodiments, the explosion-proof panel and the energy storage system according to an embodiment may be provided to be linearly movable in a first direction through the length-adjusting portion, thereby improving space efficiency.

While one or more embodiments have been described with reference to the figures, it will be understood by those of ordinary skill in the art that various changes in form and details may be made therein without departing from the scope as defined by the following claims. Therefore, the true technical scope of protection of the present disclosure should be determined by the technical idea of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An explosion-proof panel, comprising:
a support portion configured to be fixed to a container portion, the container portion configured to accommodate one or more battery modules;
a cover portion parallel to the support portion; and
a length-adjusting portion configured to adjust a separation distance between the support portion and the cover portion,
wherein the cover portion is movable in a first direction according to an internal pressure of the container portion, the separation distance being adjustable.

2. The explosion-proof panel as claimed in claim 1, wherein the cover portion includes a discharge passage through which gas inside the container portion is discharged in a space between the cover portion and the support portion.

3. The explosion-proof panel as claimed in claim 1 or 2, wherein the support portion includes a first through-hole through which gas inside the container portion is able to pass.

4. The explosion-proof panel as claimed in claim 3, wherein:
the support portion includes a plurality of the first through holes, and
the plurality of first through-holes are arranged in a predetermined arrangement.

5. The explosion-proof panel as claimed in claim 3 or 4, further comprising:
an insulating portion between the support portion and the cover portion,
wherein the insulating portion includes a second through-hole surrounding the length-adjusting portion.

6. The explosion-proof panel as claimed in claim 5, wherein the diameter of the second through-hole is smaller than the diameter of the first through-hole.

7. The explosion-proof panel as claimed in claim 5 or 6, wherein the insulating portion is movable in the first direction by a pressure of gas passing through the first through-hole, the insulating portion being spaced apart from the support portion.

8. The explosion-proof panel as claimed in any preceding claim, wherein the length-adjusting portion comprises an elastic member configured to adjust a separation space between the cover portion and the support portion by an elastic restoring force.

9. The explosion-proof panel as claimed in claim 8, wherein the elastic member has an elastic restoring force in a direction in which the cover portion moves toward the support portion.

10. An energy storage system, comprising:
a container portion having an internal space accommodating one or more battery modules, the container portion having at least one opening portion on one surface of the container portion; and
an explosion-proof panel according to any preceding claim, wherein the explosion-proof panel is configured to open and close the at least one opening portion.,

11. The energy storage system as claimed in claim 10, wherein:
the container portion comprises a corner casting at an edge thereof, and
the explosion-proof panel has a height equal to or less than a height of the corner casting.

12. The energy storage system as claimed in claim 10 or 11, wherein the support portion has a larger area than a cross-section of the at least one opening portion.
